# EUROPÄISCHE PATENTSCHRIFT

(11) **EP 4 054 308 B1**
(45) Veröffentlichungstag und Bekanntmachung des Hinweises auf die Patenterteilung: **15.01.2025**
(21) Anmeldenummer: 20801191.6
(22) Anmeldetag: 02.11.2020
(51) Int. Cl.: A01C 7/08, B07B 7/06, B65G 53/60, A01C 7/04

(54) **ABSCHEIDEVORRICHTUNG ZUR PNEUMATISCHEN NACHFÜHRUNG KÖRNIGEN MATERIALS**
SEPARATING DEVICE FOR PNEUMATICALLY FEEDING GRANULAR MATERIAL
DISPOSITIF DE SÉPARATION POUR ALIMENTATION PNEUMATIQUE EN MATÉRIAU GRANULAIRE

(30) Priorität: 08.11.2019 DE 102019130238
(43) Veröffentlichungstag der Anmeldung: 14.09.2022
(73) Patentinhaber: Amazonen-Werke H. Dreyer SE & Co. KG, 49205 Hasbergen (DE)
(72) Erfinder: LUEBBEN, Jan-Eike, 26188 Edewecht (DE)
(86) Internationale Anmeldenummer: PCT/EP2020/080619
(87) Internationale Veröffentlichungsnummer: WO 2021/089449

(56) Entgegenhaltungen:
- EP-A1- 0 331 302
- DE-A1- 102018 101 982
- US-A- 6 082 934

## Beschreibung

Die Erfindung betrifft eine Abscheidevorrichtung zur pneumatischen Nachführung körnigen Materials in eine Dosiervorrichtung einer Sämaschine gemäß Oberbegriff des Anspruchs 1.

Eine gattungsgemäße Abscheidevorrichtung ist beispielsweise aus DE 10 2018 101 982 A1 und EP 2 855 036 B1 bekannt. Derartige Abscheidevorrichtungen dienen bekanntermaßen dazu, körniges Material aus mit selbigem beladenen Luftströmungen unmittelbar stromaufwärts von Dosiervorrichtungen, wie beispielsweise Vereinzelungseinrichtungen, an einem Filtersieb abzuscheiden. Die daraus resultierenden Abluftströme werden dann vorzugsweise zur Druckbeaufschlagung der zugeordneten Dosiervorrichtungen verwendet.

Hierbei ist es üblich, die Zuluft mit dem körnigen Material direkt in ein Filtersieb zu leiten, an dessen unteren Ende ein die zugeordnete Dosiervorrichtung versorgender Saatgutkanal angeordnet ist, so dass sich das körnige Material dort, und gegebenenfalls auch im Filtersieb, ansammeln kann. Die resultierende Abluft durchströmt das Filtersieb dann von innen nach außen und wird anschließend über einen Abluftkanal von der Abscheidevorrichtung zur zugeordneten Dosiervorrichtung geleitet.

Nachteilig bei dieser bekannten Anordnung ist jedoch zum einen, dass man aufgrund des sich innerhalb des Filtersiebs gegebenenfalls ansammelnden körnigen Materials eine vergleichsweise große Filterfläche für dessen Abscheidung und einen entsprechend großen Filterquerschnitt benötigt, um einen ausreichenden Luftdurchsatz zu ermöglichen. Zudem bedingt die oben beschriebene Arbeitsweise, dass die Filtersiebe in einer aufrechten Einbaulage anzuordnen sind. Folglich müssen derartige Filtersiebe in der zugehörigen Abscheidekammer fest installiert werden und können nur nach entsprechender Demontage/Öffnung der Abscheidekammer inspiziert und/oder ausgetauscht werden. Dies kann beispielsweise durch Verlegen des Filtersiebs mit Resten des körnigen Materials erforderlich sein, um das Filtersieb zu reinigen.

Es wäre daher wünschenswert, die Reinigung und/oder den Austausch des Filtersiebs zu vereinfachen.

Zusätzlich verursacht die oben beschriebene Bauweise einen relativ großen Druckabfall am Filtersieb, da die Zuluft zumindest teilweise zwischen den Körnern des sich im Filtersieb in der Regel ansammelnden körnigen Materials hindurchströmen muss. Entsprechend muss die beladene Luftströmung mit einem relativ großen Überdruck zugeführt werden, um die Materialversorgung der angeschlossenen Dosiervorrichtung zu gewährleisten. Dies bedingt, dass auch im Filtersieb, im darunterliegenden Materialauslass und in einer daran angeschlossenen Dosierkammer der Dosiervorrichtung ein vergleichsweise hoher Druck herrscht.

Dies hat sich jedoch als nachteilig herausgestellt, da dadurch die ordnungsgemäße Belegung von Vereinzelungsscheiben behindert wird, insbesondere indem das körnige Material dann zu stark an den Vereinzelungsscheiben anhaftet. Außerdem verursachen die hohen eingangsseitigen Druckniveaus eine unerwünscht hohe mechanische Belastung des Filtersiebs und des körnigen Materials.

Somit besteht auch Bedarf für diesbezügliche Verbesserungen.

Aus der US 6 082 934 A ist ferner ein Transportcontainer mit zusätzlicher Dosierungsfunktion für körniges Gut, wie beispielsweise Saatgut, bekannt. Damit beladene Zuluft wird einer Abscheidekammer zugeführt und durchströmt schließlich ein darüber an einem Flansch hängendes Filtersieb von außen nach innen zu einem Luftauslass hin.

Die EP 0 331 302 A1 offenbart ferner eine Abscheidekammer eines Staubsaugers für körniges Gut, an die eingangsseitig ein flexibler Saugschlauch angeschlossen und die Abluft von einem externen Lüfter angesaugt wird. Hierzu wird die beladene Luft von außen nach innen durch ein hängend am Deckel der Abscheidekammer angeordnetes Filtersieb geleitet.

Wenigstens eine der genannten Aufgaben wird mit einer Abscheidevorrichtung gemäß Anspruch 1 gelöst

Demnach dient die Abscheidevorrichtung zur Abscheidung körnigen Materials bei dessen pneumatischer Nachführung in eine Dosiervorrichtung, wie beispielsweise in eine Vereinzelungsvorrichtung einer Sämaschine. Die Abscheidevorrichtung umfasst eine Abscheidekammer mit: einem Lufteinlass für mit dem körnigen Material beladene Zuluft; einem Materialauslass für das aus der Zuluft abgeschiedene Material; und einem Luftauslass für aus der Abscheidung des Materials resultierende Abluft. Ferner umfasst die Abscheidevorrichtung ein in der Abscheidekammer angeordnetes Filtersieb, das zum Zurückhalten des Materials und zum Durchlassen der Zuluft ausgebildet ist.

Erfindungsgemäß ist das Filtersieb in eine durch den Luftauslass in die Abscheidevorrichtung einsetzbare Filterkartusche integriert.

Da die Abluft für die weitere Funktion der Abscheidevorrichtung eine nur untergeordnete Rolle spiel, können zugehörige Luftauslässe vergleichsweise flexibel an der Abscheidevorrichtung angeordnet werden, beispielsweise in einem gut zugänglichen Seitenwandbereich der Abscheidevorrichtung. Das Filtersieb lässt sich somit einfach aus- und einbauen, beispielsweise zum Zwecke der Inspektion, der Reinigung oder zur Anpassung der Abscheidevorrichtung an eine bestimmtes körniges Material.

Unter einer Filterkartusche ist hierbei eine Einheit zu verstehen, die sowohl eine bestimmte Filterwirkung aufweist als auch zur ordnungsgemäßen Anordnung in der Abscheidekammer ausgebildet ist, also im Sinne eines Einsatzes, der hinsichtlich Form und Größe an einen korrespondierenden Aufnahmebereich am Luftauslass angepasst ist. Diesbezüglich ist die Filterkartusche vorzugsweise zum Führen und Verankern des Filtersiebs am Luftauslass und zum Ausleiten von Abluft unter geeigneter strömungstechnischer Abdichtung nach außen hin ausgebildet.

Beispielsweise könnten unterschiedliche Filterkartuschen bereitgestellt werden, die sich nur hinsichtlich der Filtersiebe unterscheiden, beispielsweise bezüglich ihrer Maschenweite.

Die Filterkartusche ermöglicht somit einen einfachen Einsatz oder Austausch eines speziell an die Abscheidevorrichtung und/oder das körnige Gut angepassten Filtersiebs.

Vorzugsweise ragt das Filtersieb korbförmig in die Abscheidekammer, und die Filterkartusche sitzt derart abdichtend im/am Luftauslass, dass das Filtersieb im Arbeitsbetrieb von außen nach innen durchströmt wird und die Abluft innerhalb der Filterkartusche durch/in den Luftauslass strömt. Das körnige Material kann sich dann nicht innerhalb des Filtersiebs ansammeln. Vielmehr kann für das körnige Material außerhalb des Filtersiebs ein vergleichsweise großer Sammelbereich in einer das Filtersieb aufnehmenden Abscheidekammer bereitgestellt werden.

Auf diese Weise lässt sich das abgeschiedene körnige Gut derart in der Abscheidekammer verteilen, dass es das Durchströmen des Filtersiebs nicht oder nur unwesentlich behindert. Entsprechend kann der bei der Abscheidung des körnigen Materials hervorgerufene Druckabfall minimiert werden. Dies ermöglicht entsprechend niedrigere Druckniveaus in der Abscheidekammer, im Materialauslass und in der daran angeschlossenen Dosiervorrichtung. Folglich kann die Vereinzelungsqualität der Dosiervorrichtung verbessert werden. Auch die mechanische Belastung des Filtersiebs und des daran abgeschiedenen körnigen Materials lässt sich so reduzieren.

Unter einem abdichtenden Sitz der Filterkartusche im/am Luftauslass ist zu verstehen, dass Abluftströmungen zwischen der Filterkartusche und dem korrespondierenden Aufnahmebereich am Luftauslass verhindert oder nur in vernachlässigbarem Ausmaß zugelassen werden.

Das Filtersieb ist rohrförmig oder längsgestreckt korbförmig. Die größte Längsabmessung des Filtersiebs ist somit größer als dessen größte Querabmessung. Die Abscheidung erfolgt überwiegend an der Seitenwand / Mantelfläche des Filtersiebs. Somit lässt sich ein Filtersieb mit relativ großer Filterfläche durch den Luftauslass in die Abscheidekammer einführen.

Vorzugsweise umfasst die Abscheidevorrichtung einen am Luftauslass angeordneten und werkzeuglos schließbaren/lösbaren Verankerungsmechanismus zur Verankerung der eingesetzten Filterkartusche im/am Luftauslass. Dies vereinfacht den Austausch der Filterkartusche, deren mechanische Reinigung oder dergleichen.

Vorzugsweise umfasst die Abscheidevorrichtung einen mittels Schraubverschluss oder Bajonettverschluss zu betätigenden Verankerungsmechanismus, der die Filterkartusche beim Schließen in Längsrichtung gegen einen am Luftauslass ausgebildeten Anschlag drückt. Dies ermöglicht eine vergleichsweise einfache Handhabung des Verankerungsmechanismus sowie eine zuverlässige und korrekte Positionierung der Filterkartusche am Luftauslass.

Der Bajonettverschluss ist bekanntermaßen als kombinierter Steck-Schraub-Verschluss zu verstehen. Alternativ wären aber auch andere Verschlusstypen für den Verankerungsmechanismus denkbar, wie beispielsweise Spannverschlüsse, Kniehebelschnallen oder dergleichen. Vorzugsweise umfasst der Schraubverschluss / Bajonettverschluss eine Überwurfhülse, die einen den Luftauslass ausgangsseitig begrenzenden Stutzen beim Verankern umgreift und dabei sowohl einen an der Filterkartusche ausgangsseitig nach außen überstehenden ersten Flansch abdichtend gegen den Stutzen drückt als auch einen stromabwärts anschließenden Abluftkanal mittels eines daran eingangsseitig ausgebildeten zweiten Flansches abdichtend gegen die Filterkartusche drückt, insbesondere im Bereich des ersten Flansches. Die Überwurfhülse ist somit entweder eine Überwurfmutter oder das Außenteil des Bajonettverschlusses. Dies ermöglicht sowohl eine einfache Befestigung der Filterkartusche in/an der Abscheidevorrichtung als auch deren abluftseitigen Anschluss an einen Abluftkanal, beispielsweise an eine entsprechende Schlauchverbindung.

Unter abdichtend ist hierbei zu verstehen, dass es keinen nennenswerten Austritt von Abluft zwischen der Überwurfhülse, dem Flansch, dem Anschlag und dem Abluftkanal gibt. Nichtsdestoweniger können Verbindungskanäle vom Luftauslass abzweigen bzw. in diesen münden.

Erfindungsgemäß ist das Filtersieb rohrförmig und/oder langestreckt korbförmig ausgebildet und bei eingesetzter Filterkartusche in einer liegenden Ausrichtung über dem Materialauslass angeordnet. Das abgeschiedene körnige Material kann sich daher besonders gut in unterhalb und/oder seitlich des Filtersieb gelegenen Sammelbereichen ansammeln und in eine unterhalb angeschlossene Dosiervorrichtung nachrücken, ohne den Luftdurchtritt durch das Filtersieb nennenswert zu behindern. Die beladene Zuluft kann innerhalb der Abscheidekammer somit zielgerichtet oberhalb des abgeschiedenen körnigen Materials geführt werden. Unter einer im Wesentlichen liegenden Ausrichtung soll verstanden werden, dass das Filtersieb bei eingesetzter Filterkartusche in einem Winkel kleiner 45 Grad, vorzugsweise kleiner 25 Grad, besonders vorzugsweise um etwa 15 Grad gekippt, gegenüber einer Horizontalen angeordnet ist.

Vorzugsweise umfasst der Lufteinlass wenigstens eine Einspeiseöffnung, die in einem seitlichen Abstand von der Seitenwand / Mantelfläche des eingesetzten Filtersiebs angeordnet ist. Dadurch lässt sich verhindern, dass die beladene Zuluft das Filtersieb direkt aus der Einspeiseöffnung anströmt, wodurch sich die beladene Zuluft gleichmäßiger über die Filterfläche des Filtersiebs verteilen lässt. Außerdem kann die mechanische Beanspruchung des Filtersiebs durch anströmendes körniges Material reduziert werden.

Vorzugsweise weist der Lufteinlass dann einen derartigen Verlauf auf, dass die Zuluft im Wesentlichen in einem seitlichen Abstand zur Mantelfläche des eingesetzten Filtersiebs und/oder tangential dazu in die Abscheidekammer einströmt. Auch dadurch lässt sich die mechanische Belastung des Filtersiebs und des körnigen Materials reduzieren sowie eine gleichmäßige Verteilung der beladenen Zuluft sowie des abgeschiedenen körnigen Materials begünstigen.

Vorzugsweise umfasst die Abscheidevorrichtung ferner ein über dem Filtersieb angeordnetes Sichtfenster. Das Sichtfenster ist dann im Sinne eines Schauglases derart oberhalb des Filtersiebs angeordnet, dass dessen Verschmutzungsgrad, Belegung mit Resten des körnigen Materials oder dergleichen von außen beurteilt werden kann.

Vorzugsweise ist am Luftauslass wenigstens ein quer einmündender Anschluss für eine Verbindungsleitung ausgebildet. Die Verbindungsleitung kann beispielsweise zum Druckausgleich zwischen Auslässen mehrerer Abscheidevorrichtungen und/oder zur Druckluftversorgung, insbesondere zum Freiblasen des jeweiligen Filtersiebs, dienen. Dadurch ließen sich die Filterkartuschen vergleichsweise einfach ohne deren Ausbau reinigen.

Vorzugsweise umfasst die Filterkartusche ein rohrförmiges oder langgestreckt korbförmiges Filtersieb und einen Verankerungsabschnitt zur Verankerung der Filterkartusche an einem Luftauslass der Abscheidevorrichtung. Die größte Querabmessung des Verankerungsabschnitts ist wenigstens so groß wie die größte Querabmessung des Filtersiebs. Zudem ist der Verankerungsabschnitt im Wesentlichen rohrförmig zum innenseitigen Ausleiten von Abluft aus der Filterkartusche und zum außenseitigen Führen der Filterkartusche in einem Kanal des Luftauslasses ausgebildet.

Die beschriebenen Querabmessungen ermöglichen das Einsetzen der Filterkartusche in den Luftauslass der Abscheidevorrichtung und somit das Einführen des Filtersiebs in die stromaufwärts an den Luftauslass anschließende Abscheidekammer.

Der Innenquerschnitt des Verankerungsabschnitts ermöglicht das effektive Durchströmen von Abluft, der Außenquerschnitt eine vorzugsweise koaxiale Führung der Filterkartusche in einem zugeordneten Kanal des Luftauslasses. Zudem ist der Außenquerschnitt abdichtend an den Luftauslass angepasst, um Austritt von Abluft zwischen dem Verankerungsabschnitt und dem Luftauslass zu verhindern.

Die Filterkartusche ermöglicht einen schnellen Wechsel des Filtersiebs als funktionsfähige Einheit, beispielsweise zur Anpassung der Abscheidevorrichtung an ein bestimmtes körniges Material.

Vorzugsweise ist der mittlere Innenquerschnitt des Verankerungsabschnitts größer als der mittlere Innenquerschnitt des Filtersiebs. Dies begünstigt einen ungehinderten Abluftstrom aus der Filterkartusche, also mit vergleichsweise geringem oder vernachlässigbaren Druckabfall.

Vorzugsweise umfasst der Verankerungsabschnitt einen quer nach außen abstehenden Flansch zur Einführbegrenzung der Filterkartusche in deren Längsrichtung am Luftauslass und/oder zur abluftseitigen Abdichtung der Filterkartusche nach außen hin. Die Filterkartusche lässt sich dann beispielsweise am Verankerungsabschnitt vorschieben, bis der Flansch an einem korrespondierenden Stutzen des Luftauslasses oder dergleichen Struktur anschlägt. Der derart positionierte Verankerungsabschnitt kann dann wiederum als Anschlag für einen stromabwärts anschließenden Abluftkanal verwendet werden. Dieser lässt sich beispielsweise mit Hilfe einer Überwurfhülse gegen den Flansch ziehen und dort schließlich mittels Schraub- oder Bajonettverschluss strömungsdicht anschlagend andrücken.

Dadurch können der Luftauslass, der Verankerungsabschnitt der Filterkartusche und der Abluftkanal vergleichsweise einfach aneinandergesetzt werden, insbesondere in gemeinsamer koaxialer Ausrichtung.

Vorzugsweise ist das Filtersieb rohrförmig / korbförmig mit einer abscheidenden Seitenwand / Mantelfläche und einer geschlossenen oder abscheidenden Stirnseite ausgebildet, wobei das Filtersieb ferner der Stirnseite entgegensetzt, also zum Verankerungsabschnitt hin, offen ist.

Dies ermöglicht eine stabile Ausgestaltung des Filtersiebs mit ausreichend großer Filterfläche und einem effektiven Abstrom der resultierenden Abluft innerhalb des Filtersiebs.

Vorzugsweise weist das Filtersieb einen im Wesentlichen polygonalen Querschnitt auf. Die Polygonflächen können dann im Wesentlichen als Filterflächen ausgebildet werden, die dazwischen verlaufenden Längskanten / Querwinkel im Wesentlichen als Stützprofile. Zudem lassen sich derartige polygonale Formen beispielsweise aus Metallblechen durch Laserschneiden, Stanzen und/oder Abkanten vergleichsweise einfach herstellen. Somit lassen sich mechanisch stabile Filtersiebe mit geeigneter Maschenweite kostengünstig und gegebenenfalls für unterschiedliche Korngrößenbereiche bereitstellen.

Vorzugsweise weist der Verankerungsabschnitt einen Grundkörper aus Kunststoff und/oder Metall auf und das Filtersieb einen davon eingefassten Grundkörper aus Metall. Ein Grundkörper aus Kunststoff lässt sich beispielsweise durch Spritzguss herstellen und am Filtersieb befestigen, insbesondere in Form einer Einfassung für das Filtersieb.

Eine bevorzugte Ausführungsform der Erfindung ist zeichnerisch dargestellt. Es zeigen:
- Fig. 1: eine schematische Darstellung der Abscheidevorrichtung mit eingesetzter Filterkartusche;
- Fig. 2: einen schematischen Querschnitt der Filterkartusche; und
- Fig. 3: eine Schrägansicht der Abscheidevorrichtung und einer Dosiervorrichtung.

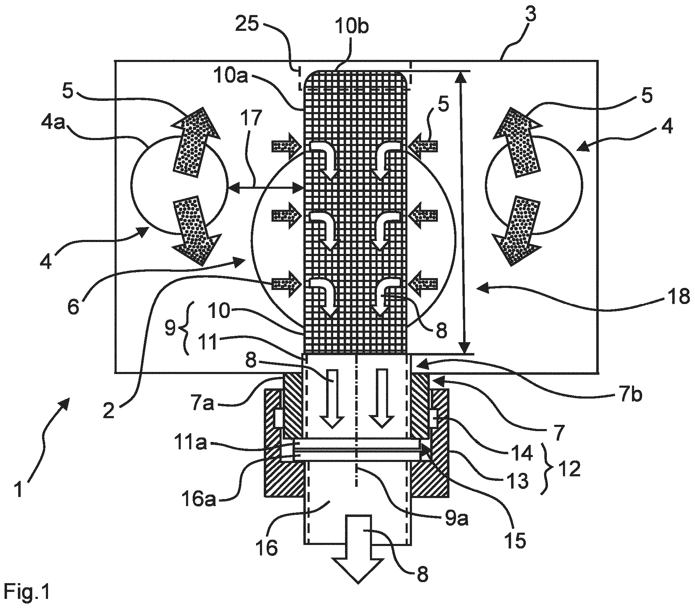

Wie die Fig. 1 erkennen lässt, umfasst die Abscheidevorrichtung 1 zur Abscheidung körnigen Materials 2, wie beispielsweise Saatgut, Dünger, Pestizid oder dergleichen, bei dessen pneumatischer Nachführung an einer Sämaschine eine Abscheidekammer 3 mit einem Lufteinlass 4 für mit dem körnigen Material 2 beladene Zuluft 5 sowie einen Materialauslass 6 für das aus der Zuluft 5 abgeschiedene körnige Material 2. Die Abscheideeinrichtung 1 umfasst ferner einen Luftauslass 7 mit einem ausgangsseitigen Stutzen 7a für nach Abscheidung des körnigen Materials 2 aus der Zuluft 5 resultierende Abluft 8.

Die Aufteilung der beladenen Zuluft 5 in das körnige Material 2 und die resultierende Abluft 8 erfolgt an einer in der Abscheidevorrichtung 1 angeordneten Filterkartusche 9, die ein Filtersieb 10 und einen Verankerungsabschnitt 11 umfasst.

Das Filtersieb 10 ist im Wesentlichen korbförmig oder rohrförmig mit einer abscheidenden Seitenwand / Mantelfläche 10a und einer vorzugsweise geschlossenen oder abscheidenden Stirnfläche 10b. Zum Verankerungsabschnitt 11 hin ist das Filtersieb 10 offen.

Das Filtersieb 10 wird bei der Abscheidung von außen nach innen durchströmt, so dass die Abluft 8 im Inneren des Filtersiebs 10 und des Verankerungsabschnitts 11 aus der Abscheidevorrichtung 1 strömt.

Zum Verankern der in die Abscheidevorrichtung 1 eingesetzten Filterkartusche 9 ist am Luftauslass 7 ein Verankerungsmechanismus 12 ausgebildet. Vorzugsweise umfasst dieser eine Überwurfhülse 13 als Bestandteil eines Schraubverschlusses oder Bajonettverschlusses.

Bei einem Schraubverschluss ist die Überwurfhülse 13 als Überwurfmutter ausgebildet und wird auf ein am ausgangsseitigen Stutzen 7a des Luftauslasses 7 vorhandenes Außengewinde (nicht dargestellt) auf prinzipiell bekannte Weise aufgeschraubt.

Bei einem Bajonettverschluss wird die Überwurfhülse 13 in bekannter Weise durch Aufstecken und anschließendes Drehen an korrespondierenden Führungszapfen 14, die dann ebenfalls auf der Außenseite des Stutzens 7a angeordnet sind, befestigt.

Beim Festziehen des Verankerungsmechanismus 12 wird vorzugsweise ein am Verankerungsabschnitt 11 der Filterkartusche 9 nach außen abstehender Flansch 11a gegen einen korrespondierenden Anschlag 15 gedrückt, der am Luftauslass 7 stirnseitig ausgebildet ist, insbesondere am ausgangsseitigen Stutzen 7a.

Der Verankerungsmechanismus 12 ist vorzugsweise derart ausgebildet, dass beim Verankern, also beispielsweise beim Festziehen der Überwurfhülse 13, zusätzlich ein Abluftkanal 16 an den Verankerungsabschnitt 11 der Filterkartusche 9 ausgangsseitig angeschlossen wird. Zu diesem Zweck kann die Überwurfhülse 13 den Abluftkanal 16 mittels eines daran eingangsseitig ausgebildeten Flansches 16a strömungsdicht gegen den Verankerungsabschnitt 11 ziehen, insbesondere gegen den Flansch 11a.

Wie die Fig. 1 in der Draufsicht auf die Abscheidevorrichtung 1 erkennen lässt, ist die Filterkartusche 9 in der Abscheidevorrichtung 1 vorzugsweise in einer liegenden Ausrichtung angeordnet. Darunter ist zu verstehen, dass die Hauptachse 9a der Filterkartusche 9 im idealisierten Arbeitsbetrieb auf horizontalem Boden mit der Horizontalen einen kleineren Winkel (nicht dargestellt) einschließt als mit der Vertikalen.

Der Materialauslass 6 ist vorzugsweise unter dem liegenden Filtersieb 10 angeordnet und dabei im Wesentlichen quer zur Hauptachse 9a der Filterkartusche 9 ausgerichtet.

Der Lufteinlass 4 umfasst vorzugsweise wenigstens eine in der Draufsicht seitlich neben dem Filtersieb 10 angeordnete Einspeiseöffnung 4a. Der kleinste seitliche Abstand 17 zwischen der Einspeiseöffnung 4a und dem Filtersieb 10 beträgt vorzugsweise wenigstens 10 mm.

Die Abscheidevorrichtung 1 umfasst einen im Wesentlichen unterhalb und außerhalb des Filtersiebs 10 angeordneten Sammelbereich 18 für das körnige Material 2.

An jede Einspeiseöffnung 4a des Lufteinlasses 4 ist ein Einspeisekanal 19 für die beladene Zuluft 5 angeschlossen, siehe Fig. 4. Der Einspeisekanal 19 ist vorzugsweise auf einen Lufteinlassbereich neben dem Filtersieb 10 gerichtet und verläuft dann folglich nicht frontal auf das Filtersieb 10 zu. Dadurch lässt sich die mechanische Belastung des körnigen Materials 2 und des Filtersiebs 10 beim Einspeisen der beladenen Zuluft 5 verringern. Dies ermöglicht einen schonenden Eintrag des körnigen Materials 2 und reduziert Verschmutzung / Beschädigung des Filtersiebs 10.

Zudem kann die beladene Zuluft 5 vergleichsweise ungehindert aus den Lufteinlassbereichen in seitlicher Richtung und/oder von oberhalb des Filtersiebs 10 gegen dieses anströmen, während sich das abgeschiedene körnige Material 2 im Wesentlichen unterhalb des Filtersiebs 10 ansammelt und von dort durch den Materialauslass 6 nach unten nachrückt.

Folglich lassen sich Druckverluste bei der Abscheidung des körnigen Materials 2 am Filtersieb 10 minimieren, wodurch generell niedrigere Druckniveaus innerhalb der Abscheidevorrichtung 1 möglich sind, also auch im Bereich des Materialauslasses 6, als bei herkömmlicher Abscheidung an einem von innen nach außen durchströmten Filtersieb. Dadurch steigt die Vereinzelungsqualität einer von der Abscheidevorrichtung 1 versorgten Dosiervorrichtung.

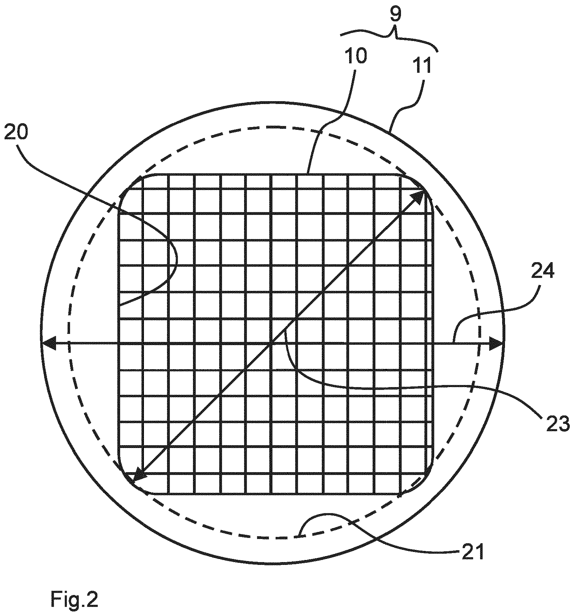

Die Fig. 2 verdeutlicht in schematischer Darstellung die prinzipiellen Größenverhältnisse und eine mögliche Formgebung der Filterkartusche 9 im Querschnitt. Demnach weist das Filtersieb 10 einen Innenquerschnitt 20 auf, der Verankerungsabschnitt einen Innenquerschnitt 21. Der Innenquerschnitt 21 des Verankerungsabschnitts 11 ist dann vorzugsweise größer als der Innenquerschnitt 20 des Filtersiebs 10. Dadurch lässt sich die Abluft 8 besonders effektiv ausleiten. Die Innenquerschnitte 20, 21 können beispielsweise über die Längserstreckung des Filtersiebs 10 gemittelte Werte sein.

Der Innenquerschnitt 20 des Filtersiebs 10 kann beispielsweise polygonal, polygonal mit abgerundeten Ecken (in Fig. 2 dargestellt), elliptisch und insbesondere kreisförmig sein. Wie die Fig. 1 und 2 verdeutlichen, ist das Filtersieb 10 im Wesentlichen rohrförmig oder langgestreckt korbförmig. Darunter ist zu verstehen, dass die größte Längsabmessung 22 des Filtersiebs 10 größer ist als seine größte Querabmessung 23.

Die größte Querabmessung 24 des Verankerungsabschnitts 11 ist zudem größer als die größte Querabmessung 23 des Filtersiebs 10. Somit lässt sich die Filterkartusche 9 sowohl durch den kanalförmigen Luftauslass 7 in die Abscheidevorrichtung 1 einführen als auch im Wesentlichen koaxial an der Innenwand 7b des Luftauslasses 7 führen.

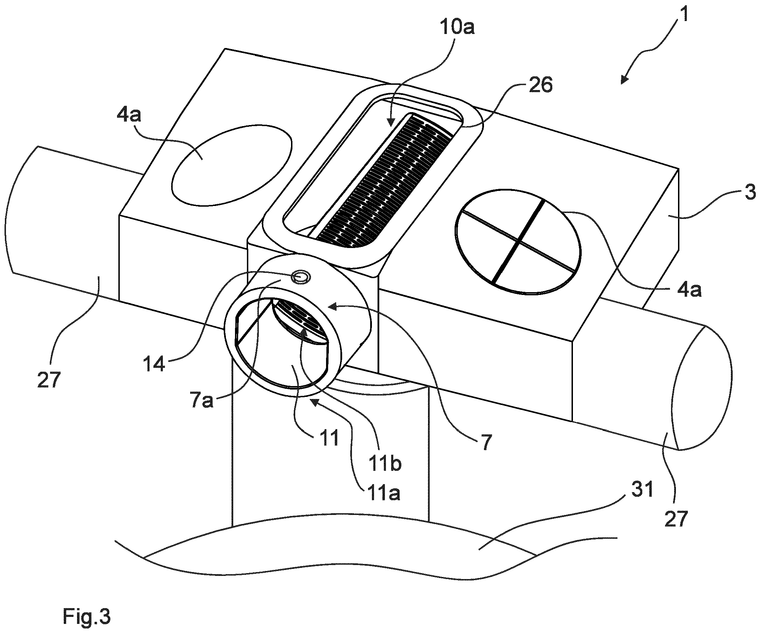

Die Filterkartusche 9 lässt sich somit einfach und reproduzierbar positionieren und auswechseln, beispielsweise zur Anpassung der Abscheidevorrichtung 1 an ein bestimmtes körniges Material 2. Hierfür wird die Filterkartusche 9 nach Lösen des Verankerungsmechanismus 12 einfach aus dem Luftauslass 7 herausgezogen, siehe Fig. 3, durch eine Filterkartusche 9 mit einem besser geeigneten Filtersieb 10 ersetzt und der Verankerungsmechanismus 12 schließlich wieder festgezogen.

Der Verankerungsmechanismus 12 lässt sich vorzugsweise werkzeuglos festziehen / lösen. Die Überwurfhülse 13 wird hierzu manuell aufgesetzt und festgezogen und umgekehrt gelöst.

Die vom Verankerungsabschnitt 11 abgewandte Stirnfläche 10b des Filtersiebs 10 kann geschlossen sein, also im Wesentlichen luftundurchlässig, oder aber als zusätzliche Filterfläche mit Abscheidewirkung ausgebildet sein. Ebenso wäre eine offene Stirnfläche 10b denkbar, also ohne Abscheidewirkung. Die Stirnfläche 10b wird dann bei ordnungsgemäß eingesetzter Filterkartusche 9 von einer an der Abscheidekammer 3 ausgebildeten Einfassung 25 abgestützt und/oder strömungsdicht umschlossen.

Die Seitenwand / Mantelfläche 10a des Filtersiebs 10 ist vorzugsweise als Lochblech ausgebildet und kann aus einem Metallblech hergestellt werden. Filterflächen mit geeignet geformten Öffnungen und geeigneter Maschenweite können beispielsweise durch Laserschneiden oder Stanzen hergestellt werden. Prinzipiell sind aber auch Drahtgewebe oder anderweitige Metallgitter als Filterflächen denkbar.

Der Verankerungsabschnitt 11 kann als mechanische Einfassung für das Filtersieb 10 ausgebildet sein. Der Verankerungsabschnitt 11 kann beispielsweise aus einem Kunststoff bestehen und an das entsprechend vorgeformte Filtersieb 10 angespritzt werden.

Ebenso lässt sich der Verankerungsabschnitt 11 aus Metall herstellen, beispielsweise aus einem Metallblech, das mit dem Filtersieb auf prinzipiell beliebige Weise verbunden werden kann. Dies ermöglicht eine besonders stabile Verankerung der Filterkartusche 9.

Die Fig. 3 zeigt in einer Schrägansicht der Abscheidevorrichtung 1, dass an deren Oberseite vorzugsweise ein Sichtfenster 26 im Sinne eines Schauglases ausgebildet sein kann, durch das die Filterkartusche 9 und insbesondere die Seitenwand / Mantelfläche 10a des Filtersiebs 10 inspiziert werden kann.

Der Stutzen 7a des Luftauslasses 7 wirkt als Widerlager für den Verankerungsmechanismus 12. Die Führungszapfen 14 für die Überwurfhülse 13 sind dann vorzugsweise auf der äußeren Mantelfläche des Stutzens 7a ausgebildet, so dass die Überwurfhülse13 koaxial aufgesteckt und festgezogen werden kann.

Ist anstelle des dargestellten Bajonettverschlusses ein Schraubverschluss vorhanden, könnte am Stutzen 7a ein Außengewinde und an der Überwurfhülse13 ein entsprechendes Innengewinde ausgebildet sein.

In beiden Fällen ist eine koaxiale Verankerung der Filterkartusche 9 und ein gleichzeitiger koaxialer Anschluss des stromabwärts weiterführenden Abluftkanals 16 werkzeuglos möglich, also eine besonders ergonomische Handhabung der Filterkartusche 9 und des Verankerungsmechanismus 12. Wird eine umständlichere Handhabung in Kauf genommen, wäre eine Verankerung der Filterkartusche 9 und ein Anschluss des Abluftkanals 16 prinzipiell aber auch mit anderen und/oder separaten Flanschverbindungen denkbar.

Beispielhaft dargestellt sind ferner Verbindungskanäle 27, die quer zum Luftauslass 7 verlaufend in diesen münden. Durch die Verbindungskanäle 27 wäre beispielsweise ein abluftseitiger Druckausgleich im Arbeitsbetrieb möglich.

Ebenso könnte durch die Verbindungskanäle 27 außerhalb des Arbeitsbetriebs Druckluft zugeführt werden, um die in die Abscheidevorrichtung 1 eingesetzte Filterkartusche 9 und insbesondere deren Filtersieb 10 durch den Luftauslass 7, also mit umgekehrter Luftströmung, durchzublasen und somit zu säubern.

Der Verankerungsabschnitt 11 kann in einem Längsabschnitt 11b, der bei verankerter Filterkartusche 9 im Bereich der Verbindungskanäle 27 angeordnet ist, gitterförmig ausgebildet sein und/oder anderweitige Öffnungen aufweisen, um die Verbindungskanäle 27 an das Filtersieb 10 anzuschließen.

Nichtsdestoweniger sind der Luftauslass 7 und der Verankerungsabschnitt 11 so ausgebildet, dass das Innere des Filtersiebs 10 strömungstechnisch entweder nur mit dem Abluftkanal 16 oder nur mit dem Abluftkanal 16 und den Verbindungskanälen 27 verbunden ist.

Die Fig. 3 zeigt der Vollständigkeit halber eine der Abscheidevorrichtung 1 zugeordnete Dosiervorrichtung 31, bei der es sich insbesondere um eine Vereinzelungseinheit für das körnige Material 2 handelt. Das in der Abscheideeinrichtung 1 abgeschiedene körnige Material 2 wird dann auf bekannte Weise mittels einer (nicht dargestellten) Vereinzelungsscheibe vereinzelt und von der Dosiervorrichtung 31 abgegeben.

Der an den Luftauslass 7 angeschlossene Abluftkanal 16 wird dann beispielsweise mit einem Verbindungsschlauch an eine an der Dosiervorrichtung 31 vorhandene Einspeiseöffnung für Abluft angeschlossen, um die Dosiervorrichtung 31 intern mit Druckluft zu beaufschlagen. Hierfür ist insbesondere das aufgrund der liegenden Anordnung des Filtersiebs 10 und der im Arbeitsbetrieb darin herrschenden Strömungsrichtung niedrige Druckniveau in der Abscheidevorrichtung 1 vorteilhaft.

Die Abluft 8 lässt sich somit separat von einem Versorgungsluftstrom zur grundlegenden Überdruckbeaufschlagung der Dosiervorrichtung 31 in diese einleiten, um die Belegung der Vereinzelungsscheibe weiter zu verbessern und/oder Abstreifelemente für die Vereinzelungsscheibe gezielt anzublasen.

Mit der beschriebenen Abscheidevorrichtung 1 und der darin eingesetzten Filterkartusche 9 lässt sich sowohl die Abscheidung des körnigen Materials 2 aus der beladenen Zuluft 5 im regulären Arbeitsbetrieb optimieren als auch die Vereinzelungsqualität einer zugeordneten Dosiervorrichtung 31.

Die vorzugsweise werkzeuglos auswechselbare Filterkartusche 9 lässt sich zudem besonders einfach handhaben und ermöglicht eine flexible und schnelle Anpassung der Abscheidevorrichtung 1 an unterschiedliche körnige Materialien 2 sowie eine einfache Reinigung des Filtersiebs 10.

## Patentansprüche

1. Abscheidevorrichtung (1) zur Abscheidung körnigen Materials (2) bei dessen pneumatischer Nachführung in eine Dosiervorrichtung (31) einer Sämaschine, umfassend:
- eine Abscheidekammer (3) mit einem Lufteinlass (4) für mit dem körnigen Material beladene Zuluft (5), mit einem Materialauslass (6) für das aus der Zuluft abgeschiedene Material und mit einem Luftauslass (7) für nach Abscheidung des Materials resultierende Abluft (8); und
- ein in der Abscheidekammer angeordnetes Filtersieb (10), das zum Zurückhalten des Materials und zum Durchlassen der Zuluft ausgebildet ist,
**dadurch gekennzeichnet, dass** das Filtersieb in eine durch den Luftauslass in die Abscheidevorrichtung einsetzbare Filterkartusche (9) integriert ist, rohrförmig und/oder langgestreckt korbförmig ausgebildet ist und bei eingesetzter Filterkartusche (9) in einer liegenden Ausrichtung über dem Materialauslass (6) angeordnet ist.

2. Abscheidevorrichtung nach Anspruch 1, wobei das Filtersieb (10) korbförmig in die Abscheidekammer (3) ragt und die Filterkartusche (9) derart im/am Luftauslass (7) sitzt, dass das Filtersieb im Arbeitsbetrieb von außen nach innen durchströmt wird und die Abluft (8) innerhalb der Filterkartusche durch/in den Luftauslass strömt.

3. Abscheidevorrichtung nach Anspruch 1 oder 2, mit einem am Luftauslass (7) angeordneten und werkzeuglos schließbaren/lösbaren Verankerungsmechanismus (12) zur Verankerung der eingesetzten Filterkartusche (9) im/am Luftauslass.

4. Abscheidevorrichtung nach einem der Ansprüche 1 bis 3, mit einem mittels Schraubverschluss oder Bajonettverschluss zu betätigenden Verankerungsmechanismus (12) umfassend einen am Luftauslass (7) ausgebildeten Anschlag (15), gegen den die Filterkartusche (9) beim Verankern in deren Längsrichtung gedrückt wird.

5. Abscheidevorrichtung nach 4, wobei der Schraubverschluss / Bajonettverschluss eine Überwurfhülse (13) umfasst, die einen den Luftauslass (7) ausgangsseitig begrenzenden Stutzen (7a) beim Verankern umgreift und dabei sowohl einen an einem Verankerungsabschnitt (11) der Filterkartusche (9) ausgangsseitig nach außen überstehenden ersten Flansch (11a) abdichtend gegen den Stutzen drückt als auch einen stromabwärts anschließenden Abluftkanal (16) mittels eines daran eingangsseitig ausgebildeten zweiten Flansches (16a) abdichtend gegen die Filterkartusche drückt, insbesondere im Bereich des ersten Flansches.

6. Abscheidevorrichtung nach wenigstens einem der vorigen Ansprüche, wobei der Lufteinlass (4) wenigstens eine Einspeiseöffnung (4a) umfasst, die in einem seitlichen Abstand (17) von der Seitenwand / Mantelfläche (10a) des eingesetzten Filtersiebs (10) angeordnet ist.

7. Abscheidevorrichtung nach Anspruch 6, wobei der Lufteinlass (4) einen derartigen Verlauf aufweist, dass die Zuluft im Wesentlichen in einem seitlichen Abstand zur Seitenwand / Mantelfläche (10a) des eingesetzten Filtersiebs (10) und/oder tangential dazu in die Abscheidekammer (3) einströmt.

8. Abscheidevorrichtung nach wenigstens einem der vorigen Ansprüche, mit einem über dem Filtersieb (10) angeordneten Sichtfenster (26).

9. Abscheidevorrichtung nach wenigstens einem der vorigen Ansprüche, wobei die Filterkartusche das rohrförmige oder langgestreckt korbförmige Filtersieb (10) und ein Verankerungsabschnitt (11) zur Verankerung der Filterkartusche umfasst, wobei die größte Querabmessung (24) des Verankerungsabschnitts wenigstens so groß ist wie die größte Querabmessung (23) des Filtersiebs, und der Verankerungsabschnitt im Wesentlichen rohrförmig zum innenseitigen Ausleiten von Abluft (8) aus der Filterkartusche und zum außenseitigen Führen der Filterkartusche in einem Luftauslass (7) der Abscheidevorrichtung ausgebildet ist.

10. Filterkartusche nach Anspruch 9, wobei der mittlere Innenquerschnitt (21) des Verankerungsabschnitts (11) größer ist als der mittlere Innenquerschnitt (20) des Filtersiebs (10).

11. Filterkartusche nach Anspruch 9 oder 10, wobei der Verankerungsabschnitt (11) einen quer nach außen abstehenden Flansch (11a) zur Einführbegrenzung der Filterkartusche (9) in deren Längsrichtung und/oder zur abluftseitigen Abdichtung der Filterkartusche nach außen hin umfasst.

12. Filterkartusche nach einem der Ansprüche 9 bis 11, wobei das Filtersieb (10) rohrförmig mit einer abscheidenden Seitenwand / Mantelfläche (10a) und einer geschlossenen oder abscheidenden Stirnseite (10b) ausgebildet und, der Stirnseite entgegengesetzt, zum Verankerungsabschnitt (11) hin offen ist.

13. Filterkartusche nach einem der Ansprüche 9 bis 12, wobei das Filtersieb (10) einen im Wesentlichen polygonalen Querschnitt aufweist.

14. Filterkartusche nach einem der Ansprüche 9 bis 13, wobei der Verankerungsabschnitt (11) einen Grundkörper aus Kunststoff oder Metall und das Filtersieb (10) einen davon eingefassten Grundkörper aus Metall umfasst.

## Claims

1. Separation device (1) for separating granular material (2) as it is pneumatically fed into a metering device (31) of a seed drill, comprising:
- a separation chamber (3) having an air inlet (4) for supply air (5) loaded with the granular material, having a material outlet (6) for the material separated from the supply air, and having an air outlet (7) for exhaust air (8) resulting after separation of the material; and
- a filter screen (10) which is arranged in the separation chamber and is designed to retain the material and to allow the supply air to pass through,
**characterized in that** the filter screen is integrated into a filter cartridge (9) which can be inserted into the separation device through the air outlet, and the filter screen is tubular and/or in an elongate basket shape and, when the filter cartridge (9) is inserted, is arranged in a horizontal orientation above the material outlet (6).

2. Separation device according to claim 1, wherein the filter screen (10) projects into the separation chamber (3) in a basket shape and the filter cartridge (9) is seated in/on the air outlet (7) in such a way that the filter screen is flowed through from the outside to the inside during operation and the exhaust air (8) inside the filter cartridge flows through/into the air outlet.

3. Separation device according to claim 1 or 2, having an anchoring mechanism (12) which is arranged on the air outlet (7) and can be locked/released without tools, for anchoring the inserted filter cartridge (9) in/on the air outlet.

4. Separation device according to any of claims 1 to 3, having an anchoring mechanism (12) to be actuated by means of a screw cap or bayonet cap, comprising a stop (15) which is formed on the air outlet (7) and against which the filter cartridge (9) is pressed in its longitudinal direction during anchoring.

5. Separation device according to 4, wherein the screw cap / bayonet cap comprises a cover sleeve (13) which, when anchored, encompasses a nozzle (7a) delimiting the air outlet (7) on the outlet side and in so doing presses a first flange (11a), which projects outward on the outlet side on an anchoring portion (11) of the filter cartridge (9), against the nozzle in a sealing manner and also presses a downstream exhaust air duct (16) against the filter cartridge in a sealing manner by means of a second flange (16a) formed thereon on the inlet side, in particular in the region of the first flange.

6. Separation device according to at least one of the preceding claims, wherein the air inlet (4) comprises at least one feed opening (4a) which is arranged at a lateral distance (17) from the side wall / lateral surface (10a) of the inserted filter screen (10).

7. Separation device according to claim 6, wherein the air inlet (4) has a course such that the supply air flows into the separation chamber (3) substantially at a lateral distance from the side wall / lateral surface (10a) of the inserted filter screen (10) and/or tangentially thereto.

8. Separation device according to at least one of the preceding claims, having a viewing window (26) arranged above the filter screen (10).

9. Separation device according to at least one of the preceding claims, wherein the filter cartridge comprises the tubular or elongate basket-shaped filter screen (10) and an anchoring portion (11) for anchoring the filter cartridge, wherein the largest transverse dimension (24) of the anchoring portion is at least as large as the largest transverse dimension (23) of the filter screen, and the anchoring portion is substantially tubular for internal discharge of exhaust air (8) from the filter cartridge and for external guidance of the filter cartridge in an air outlet (7) of the separation device.

10. Filter cartridge according to claim 9, wherein the average internal cross section (21) of the anchoring portion (11) is larger than the central internal cross section (20) of the filter screen (10).

11. Filter cartridge according to claim 9 or 10, wherein the anchoring portion (11) comprises a flange (11a) protruding transversely outward for limiting the insertion of the filter cartridge (9) in its longitudinal direction and/or for sealing the filter cartridge to the outside on the exhaust air side.

12. Filter cartridge according to any of claims 9 to 11, wherein the filter screen (10) is tubular with a separating side wall / lateral surface (10a) and a closed or separating end face (10b) and, opposite the end face, is open toward the anchoring portion (11).

13. Filter cartridge according to any of claims 9 to 12, wherein the filter screen (10) has a substantially polygonal cross section.

14. Filter cartridge according to any of claims 9 to 13, wherein the anchoring portion (11) comprises a main body made of plastics material or metal, and the filter screen (10) comprises a main body which is made of metal and enclosed thereby.

## Revendications

1. Dispositif de séparation (1) permettant la séparation d'un matériau granulaire (2) lors de son alimentation pneumatique dans un dispositif de dosage (31) d'un semoir, comprenant :
- une chambre de séparation (3) comportant une entrée d'air (4) pour l'air d'alimentation (5) chargé avec le matériau granulaire, comportant une sortie de matériau (6) pour le matériau séparé de l'air d'alimentation et comportant une sortie d'air (7) pour l'air d'évacuation (8) résultant après la séparation du matériau ; et
- un tamis filtrant (10) disposé dans la chambre de séparation, qui est conçu pour la rétention du matériau et pour le passage de l'air d'alimentation,
**caractérisé en ce que** le tamis filtrant est intégré dans une cartouche filtrante (9) pouvant être insérée dans le dispositif de séparation à travers la sortie d'air, est conçu en forme de tube et/ou de panier allongé et est disposé au-dessus de la sortie de matériau (6) dans une orientation couchée lorsque la cartouche filtrante (9) est insérée.

2. Dispositif de séparation selon la revendication 1, dans lequel le tamis filtrant (10) fait saillie en forme de panier dans la chambre de séparation (3) et la cartouche filtrante (9) est placée dans/sur la sortie d'air (7) de telle sorte que le tamis filtrant est traversé de l'extérieur vers l'intérieur pendant le fonctionnement et que l'air d'évacuation (8) s'écoule à l'intérieur de la cartouche filtrante à travers/dans la sortie d'air.

3. Dispositif de séparation selon la revendication 1 ou 2, comportant un mécanisme d'ancrage (12) disposé sur la sortie d'air (7) et pouvant être fermé/détaché sans outil pour l'ancrage de la cartouche filtrante (9) insérée dans/sur la sortie d'air.

4. Dispositif de séparation selon l'une des revendications 1 à 3, comportant un mécanisme d'ancrage (12) à actionner à l'aide d'une fermeture à vis ou d'une fermeture à baïonnette, comprenant une butée (15) conçue sur la sortie d'air (7), contre laquelle la cartouche filtrante (9) est pressée lors de l'ancrage dans sa direction longitudinale.

5. Dispositif de séparation selon 4, dans lequel la fermeture à vis / fermeture à baïonnette comprend une douille d'accouplement (13) qui, lors de l'ancrage, entoure une tubulure (7a) délimitant la sortie d'air (7) côté sortie, et qui, ce faisant, aussi bien presse de manière étanche contre la tubulure une première bride (11a) faisant saillie vers l'extérieur côté sortie sur une section d'ancrage (11) de la cartouche filtrante (9), que presse de manière étanche contre la cartouche filtrante un canal d'évacuation d'air (16) raccordé en aval, à l'aide d'une seconde bride (16a) conçue sur celle-ci côté entrée, en particulier dans la zone de la première bride.

6. Dispositif de séparation selon au moins l'une des revendications précédentes, dans lequel l'entrée d'air (4) comprend au moins une ouverture d'arrivée (4a) qui est disposée à une distance latérale (17) de la paroi latérale / surface d'enveloppe (10a) du tamis filtrant (10) inséré.

7. Dispositif de séparation selon la revendication 6, dans lequel l'entrée d'air (4) présente un tracé tel que l'air d'alimentation pénètre dans la chambre de séparation (3) essentiellement à une distance latérale de la paroi latérale / surface d'enveloppe (10a) du tamis filtrant (10) inséré et/ou tangentiellement à celle-ci.

8. Dispositif de séparation selon au moins l'une des revendications précédentes, comportant une fenêtre de visualisation (26) disposée au-dessus du tamis filtrant (10).

9. Dispositif de séparation selon au moins l'une des revendications précédentes, dans lequel la cartouche filtrante comprend le tamis filtrant (10) tubulaire ou en forme de panier allongé et une section d'ancrage (11) pour ancrer la cartouche filtrante, dans lequel la plus grande dimension transversale (24) de la section d'ancrage est au moins aussi grande que la plus grande dimension transversale (23) du tamis filtrant, et la section d'ancrage est conçue essentiellement en forme de tube pour l'évacuation de l'air d'évacuation (8) de la cartouche filtrante du côté intérieur et pour le guidage de la cartouche filtrante du côté extérieur dans une sortie d'air (7) du dispositif de séparation.

10. Cartouche filtrante selon la revendication 9, dans laquelle la section transversale intérieure moyenne (21) de la section d'ancrage (11) est supérieure à la section transversale intérieure moyenne (20) du tamis filtrant (10).

11. Cartouche filtrante selon la revendication 9 ou 10, dans laquelle la section d'ancrage (11) comprend une bride (11a) faisant saillie transversalement vers l'extérieur pour limiter l'introduction de la cartouche filtrante (9) dans sa direction longitudinale et/ou pour l'étanchéification de la cartouche filtrante vers l'extérieur du côté de l'air d'évacuation.

12. Cartouche filtrante selon l'une des revendications 9 à 11, dans laquelle le tamis filtrant (10) est conçu de forme tubulaire avec une paroi latérale / surface d'enveloppe (10a) séparatrice et une face frontale (10b) fermée ou séparatrice et, à l'opposé de la face frontale, est ouvert vers la section d'ancrage (11).

13. Cartouche filtrante selon l'une des revendications 9 à 12, dans laquelle le tamis filtrant (10) présente une section transversale essentiellement polygonale.

14. Cartouche filtrante selon l'une des revendications 9 à 13, dans laquelle la section d'ancrage (11) comprend un corps de base en plastique ou en métal et le tamis filtrant (10) comprend un corps de base en métal bordé par celui-ci.
